# EUROPÄISCHE PATENTSCHRIFT

(11) **EP 3 856 609 B1**
(45) Veröffentlichungstag und Bekanntmachung des Hinweises auf die Patenterteilung: **06.11.2024**
(21) Anmeldenummer: 19773815.6
(22) Anmeldetag: 23.09.2019
(51) Int. Cl.: B62D 1/18

(54) **VERSTELLBARE LENKSÄULE**
ADJUSTABLE STEERING COLUMN
COLONNE DE DIRECTION RÉGLABLE

(30) Priorität: 25.09.2018 DE 102018123538
(43) Veröffentlichungstag der Anmeldung: 04.08.2021
(73) Patentinhaber: thyssenkrupp Presta AG, 9492 Eschen (LI); thyssenkrupp AG, 45143 Essen (DE)
(72) Erfinder: MACHINEK, Manoel, 9436 Balgach (CH)
(74) Vertreter: thyssenkrupp Intellectual Property GmbH
(86) Internationale Anmeldenummer: PCT/EP2019/075554
(87) Internationale Veröffentlichungsnummer: WO 2020/064646

(56) Entgegenhaltungen:
- EP-A2- 1 870 309
- CN-A- 107 512 304
- DE-A1- 102010 036 891
- KR-B1- 101 615 224
- US-A1- 2011 175 335
- US-A1- 2014 026 707
- US-A1- 2016 059 879
- US-A1- 2016 176 436

## Beschreibung

Die Erfindung betrifft eine verstellbare Lenksäule. Eine verstellbare Lenksäule gemäß dem Oberbegriff des Patentanspruchs 1 ist beispielsweise aus der JP 2012 176753 A bekannt.

Generell sind Lenksäulen für Kraftfahrzeuge bekannt, bei denen eine Lenkradposition an die Sitzposition des Fahrers des Kraftfahrzeugs anpassbar ist. Die Lenksäule weist dazu eine verstellbare Lenkspindel auf, an der ein Lenkrad befestigt ist. Die Lenksäule ist im Wesentlichen derart verstellbar, dass das Lenkrad durch eine Längenverstellung in Längsrichtung der Lenksäule im Fahrzeuginnenraum positionierbar ist. Zur Verstellbegrenzung einer maximalen und minimalen Verstelllänge der Lenksäule, sind diese mit einem oder mehreren Endanschlägen ausgestattet, wobei der Anschlagkörper einen ersten Anschlagabschnitt aufweist, der wenigstens zwei erste Teilabschnitte und wenigstens einen dazwischenliegenden, ersten Zwischenabschnitt umfasst, wobei die ersten Teilabschnitte konvex ausgebildet sind und der erste Zwischenabschnitt konkav ausgebildet ist.

Aus der eingangs genannten JP2012176753A ist eine verstellbare Lenksäule mit einem Anschlagkörper zur Begrenzung der Verstelllänge bekannt. Der Anschlagkörper weist eine elliptische Form mit zwei elastisch verformbaren Bereichen auf. Ferner ist der Anschlagkörper durch ein Polyamidharz gebildet.

Eine Lenksäule der eingangs genannten Art ist in der KR 101 615 224 B1 oder der US 2014/026707 A1 beschrieben.

Nachteilig ist hierbei, dass der Anschlagkörper keine ausreichenden Dämpfungseigenschaften aufweist und bei zu starker Anschlagkraft bzw. im Missbrauchsfall durch den Fahrer ungewollt beschädigt bzw. zerstört wird.

Der Erfindung liegt daher die Aufgabe zu Grunde, eine verstellbare Lenksäule für ein Kraftfahrzeug anzugeben, bei der durch einen verbesserten Anschlagkörper ein Anschlagverhalten bei der Verstellung der Lenksäule verbessert und eine Lebensdauer erhöht wird.

Erfindungsgemäß wird diese Aufgabe im Hinblick auf die verstellbare Lenksäule durch den Gegenstand des Anspruchs 1 gelöst. Vorteilhafte Weiterbildungen ergeben sich aus den Unteransprüchen.

Die Erfindung beruht auf dem Gedanken eine verstellbare Lenksäule für ein Kraftfahrzeug anzugeben, die eine Halteeinheit und eine Stelleinheit mit einer drehbar gelagerten Lenkspindel umfasst. Die Stelleinheit ist gegenüber der Halteeinheit verschiebbar angeordnet und weist wenigstens einen Anschlagkörper auf, der mit der Stelleinheit fest verbunden ist. Die Halteeinheit umfasst einen Gegenanschlag, der mit dem Anschlagkörper zur Begrenzung einer Verschiebebewegung der Stelleinheit zusammenwirkt. Der Anschlagkörper weist einen ersten Anschlagabschnitt auf, der wenigstens zwei erste Teilabschnitte und wenigstens einen dazwischenliegenden, ersten Zwischenabschnitt umfasst. Die ersten Teilabschnitte sind konvex ausgebildet und der erste Zwischenabschnitt ist konkav ausgebildet.

Erfindungsgemäß ist vorgesehen, dass der Anschlagkörper aus einem Material gebildet ist, das einen Shore-D-Härtewert zwischen 40 und 80 aufweist. Der Anschlagkörper kann auch aus einem Material gebildet sein, das einen Shore-D-Härtewert zwischen 50 und 60, insbesondere zwischen 55 und 65, aufweist. Ferner kann der Anschlagkörper aus einem Material gebildet sein, das einen Shore-D-Härtewert von 64 aufweist. Die Härtewerte ergeben sich gemäß einer Prüfung des Materials gemäß DIN ISO 7619-1 bei einer Haltezeit von 15 Sekunden.

Die Stelleinheit ist gegenüber der Halteeinheit verschiebbar angeordnet, so dass die Stelleinheit relativ zur Halteeinheit verschiebbar ist.

Die Halteeinheit ist bevorzugt mit dem Kraftfahrzeug direkt oder indirekt verbindbar.

In einer Ausführung der Erfindung kann Stelleinheit beispielsweise als oberes Mantelrohr ausgebildet sein, wobei die Halteeinheit als unteres Mantelrohr ausgebildet ist, und diese zueinander teleskopierend verschiebbar sind, in dem das eine Mantelrohr in dem anderen verschiebbar aufgenommen ist. In dieser Ausführung begrenzt der Anschlagkörper die Längsverstellung der Lenksäule, also die Bewegung der Stelleinheit relativ zur Halteeinheit in Richtung der Längsachse der Lenkspindel.

In einer weiteren Ausführung der Erfindung kann die Stelleinheit als Mantelrohr ausgebildet sein und gegenüber der Halteeinheit in Höhenrichtung verschiebbar sein. Die Verschiebung kann in diesem Fall als Schwenkbewegung um eine Schwenkachse erfolgen. In dieser Ausführung begrenzt der Anschlagkörper die Höhenverstellung der Lenksäule, d.h. eine Bewegung der Stelleinheit relativ zur Halteeinheit in Höhenrichtung. Die Höhenrichtung ist jene Richtung die orthogonal zur Längsachse der Lenkspindel ausgerichtet ist.

Die Verschiebung, Verschiebebewegung bzw. eine verschiebbare Anordnung ist im Sinne der Erfindung nicht auf eine rein translatorische Verlagerung zweier Körper zueinander beschränkt, sondern dies kann auch rotatorisch Verlagerung sein oder eine solche umfassen.

Somit kann der Anschlagkörper sowohl zur Begrenzung der Verschiebebewegung in Längsrichtung und/oder in Höhenrichtung eingesetzt werden.

In einer Anschlagsituation, in der der Anschlagkörper der Stelleinheit mit dem Gegenanschlag der Halteeinheit zur Begrenzung einer Verschiebebewegung der Stelleinheit zusammenwirkt, stehen die ersten Teilabschnitte des Anschlagkörpers mit dem Gegenanschlag in Kontakt. Mit anderen Worten sind die ersten Teilabschnitte des Anschlagkörpers mit dem Gegenanschlag in Kontakt bringbar. Die ersten Teilabschnitte weisen dazu jeweils eine Kontaktfläche auf. Die ersten Teilabschnitte des ersten Anschlagabschnitts sind voneinander beabstandet ausgebildet, wobei der erste Zwischenabschnitt zwischen den ersten Teilabschnitten vorgesehen ist. Beispielsweise kann der erste Anschlagabschnitt gabelförmig ausgebildet sein.

Die Erfindung hat verschiedene Vorteile. Durch die konvexen, ersten Teilabschnitte des ersten Anschlagabschnitts werden die Anschlagkräfte in den Anschlagkörper verbessert eingeleitet. Dadurch kann der Anschlagkörper vorteilhaft einen erheblichen Teil der auftretenden Anschlagenergie absorbieren. Der Anschlagkörper weist somit verbesserte Dämpfungseigenschaften auf. Ferner wird dadurch vorteilhaft eine unvorhergesehene Beschädigung bzw. Zerstörung des Anschlagkörpers bei zu hoher Anschlaggeschwindigkeit bzw. Anschlagkraft bei der Verstellung der Lenksäule verhindert. Das Anschlagverhalten bei der Verstellung der verstellbaren Lenksäule wird somit verbessert sowie eine Lebensdauer erhöht.

Bevorzugte Ausführungsformen der Erfindung sind in den Unteransprüchen angegeben.

Bei einer besonders bevorzugten Ausführungsform weist der Anschlagkörper wenigstens einen zweiten Anschlagabschnitt auf, der wenigstens zwei zweite Teilabschnitte und wenigstens einen dazwischenliegenden, zweiten Zwischenabschnitt umfasst. Die zweiten Teilabschnitte sind konvex ausgebildet und der zweite Zwischenabschnitt ist konkav ausgebildet. Durch die konvexen, zweiten Teilabschnitte und den dazwischenliegenden, zweiten Zwischenabschnitt ist der zweite Anschlagabschnitt gabelförmig ausgebildet. In einer Anschlagsituation, in der der Anschlagkörper der Stelleinheit mit dem Gegenanschlag der Halteeinheit zur Begrenzung einer Verschiebebewegung der Stelleinheit zusammenwirkt, stehen die zweiten Teilabschnitte des Anschlagkörpers vorzugsweise mit einem zweiten Gegenanschlag der Halteeinheit in Kontakt. Dabei kann der Anschlagkörper durch den zweiten Anschlagabschnitt mit einem zweiten Gegenanschlag der Halteeinheit zusammenwirken, wodurch eine Verschiebebewegung in eine zweite Verschieberichtung begrenzt wird.

Hierbei ist vorteilhaft, dass durch die gabelförmige Ausbildung der zweiten Teilabschnitte des zweiten Anschlagabschnitts die Anschlagkräfte in den Anschlagkörper verbessert eingeleitet werden. Dadurch kann der Anschlagkörper vorteilhaft einen erheblichen Teil der auftretenden Anschlagenergie absorbieren. Der Anschlagkörper weist somit verbesserte Dämpfungseigenschaften auf, wodurch vorteilhaft eine unvorhergesehene Beschädigung bzw. Zerstörung des Anschlagkörpers bei zu hoher Anschlaggeschwindigkeit bzw. Anschlagkraft bei der Verstellung der Lenksäule verhindert wird. Das Anschlagverhalten bei der Verstellung der verstellbaren Lenksäule wird somit verbessert sowie eine Lebensdauer erhöht.

Bei einer bevorzugten Ausführungsform weisen die Teilabschnitte jeweils einen Radius R1 und der Zwischenabschnitt einen weiteren Radius R2 auf, wobei der Radius R1 größer ist als der weitere Radius R2. Die Radien R1 der konvexen Teilabschnitte bilden eine ausreichend große Anschlagfläche, wodurch die Anschlagkräfte verbessert durch den Anschlagkörper aufnehmbar sind. Ferner werden durch die Radien R1 der Teilabschnitte vorteilhaft Kraftspitzen in einer Anschlagsituation an und/oder in den Teilabschnitten verhindert. Dadurch werden eine Lebensdauer erhöht und ein Anschlagverhalten bzw. eine Enddämpfung bei der Verstellung der Lenksäule verbessert. Des Weiteren können dank der erfindungsgemäßen Maßnahmen eine Zerstörung des Anschlagkörpers im Missbrauchsfall vermieden werden, wenn der Anschlagkörper mit einem außerordentlichen hohen Impuls auf den Gegenanschlag trifft.

Bei einer weiteren bevorzugten Ausführungsform weist der Anschlagkörper wenigstens eine Durchgangsöffnung mit einer Längsachse, insbesondere zentralen Längsachse, zur Befestigung an der Stelleinheit auf. Die Durchgangsöffnung kann quer zur Längsseite des Anschlagkörpers im Anschlagkörper ausgebildet sein. Hierbei ist vorteilhaft, dass der Anschlagkörper durch wenigstens ein Befestigungselement, wie bspw. einen Stift, eine Schraube, einen Niet, einen Scherbolzen oder ein weiteres Befestigungselement, auf einfache Weise mit der Stelleinheit verbindbar ist.

Es kann vorgesehen sein, dass das Befestigungselement in einem Crashfall abschert bzw. zerbricht, wenn der Anschlagkörper gegen den Gegenanschlag schlägt, so dass die Stelleinheit gegenüber der Halteeinheit über den normalen Bereich hinaus bewegbar ist. Im Crashfall wird eine unfallbedingte hohe Kraft in die Lenkspindel eingetragen, die größer ist als eine Kraft die im Normalbetrieb oder im Missbrauchsfall auftritt.

Vorzugsweise umfassen die Teilabschnitte jeweils einen Scheitelpunkt, der einen ersten Abstand oder einen zweiten Abstand zur Längsachse der Durchgangsöffnung aufweist, wobei der erste Abstand und der zweite Abstand einen gleichen oder ungleichen Wert aufweisen. Dabei kann der Scheitelpunkt des ersten Teilabschnitts den ersten Abstand und der Scheitelpunkt des zweiten Teilabschnitts den zweiten Abstand aufweisen. Es ist auch denkbar, dass die Scheitelpunkte der jeweiligen Teilabschnitte einen unterschiedlichen Abstand zur Längsachse der Durchgangsöffnung aufweisen. Dies hat den Vorteil, dass anforderungsspezifische Ausgestaltungen des Anschlagkörpers durch längere oder kürzere Abstände der Scheitelpunkte zur Längsachse der Durchgangsöffnungen ermöglicht werden. Somit wird eine erhöhte Variantenvielfalt des Anschlagkörpers erreicht.

Weiter vorzugsweise weist der Anschlagkörper in wenigstens einem der beiden Anschlagabschnitte einen Verstärkungsabschnitt auf, der eine Dicke des Anschlagkörpers bereichsweise vergrößert. Dies hat den Vorteil, dass je nach Ausgestaltung bzw. Auslegung des Verstärkungsabschnitts eine auftretende Anschlagkraft durch den Anschlagkörper verbessert aufnehmbar ist. Dadurch kann eine Beschädigung des Anschlagkörpers bei einer unsachgemäßen Verstellung der Lenksäule verhindert werden. Eine Lebensdauer der verstellbaren Lenksäule wird hierbei erhöht.

In einer vorteilhaften Weiterbildung umfasst der Anschlagkörper einen Kunststoff und/oder ein Elastomer. Dies hat den Vorteil, dass der Anschlagkörper einfach und kostengünstig herstellbar ist und eine weiter verbesserte Dämpfung ermöglicht.

In einer vorteilhaften Weiterbildung kann die Lenksäule eine Spanneinrichtung umfassen, die zwischen einer Fixierstellung (Feststellposition) und einer Freigabestellung (Freigabeposition) umschaltbar ist, wobei in der Fixierstellung die Stelleinheit gegenüber der Halteinheit festgesetzt ist und in der Freigabestellung die Stelleinheit gegenüber der Halteeinheit verstellbar ist.

In einer vorteilhaften Weiterbildung kann der Anschlagkörper mit der Spanneinrichtung gekoppelt sein, wobei die Spanneinrichtung zusammen mit der Stelleinheit gegenüber dem Halteelement verschiebbar bzw. verschwenkbar ist. In einer besonders vorteilhaften Ausführungsform kann die Spanneinrichtung eine Spannachse umfassen, wobei der Anschlagkörper auf der Spannachse angeordnet ist.

Bei einer bevorzugten Ausführungsform ist der Anschlagkörper aus Kunststoff und/oder Elastomer gebildet. Dies hat den Vorteil, dass der Anschlagkörper einfach und kostengünstig herstellbar ist. Beispielsweise kann der Anschlagkörper durch ein Spritzgießverfahren hergestellt werden. Es ist auch denkbar, dass der Anschlagkörper ein zerspantes Bauteil ist, besonders bevorzugt aus dem Vollen gefräst ist. Mit anderen Worten kann der Anschlagkörper durch ein Frästeil gebildet sein. Der Anschlagkörper kann einstückig ausgebildet sein. Vorzugsweise ist der Anschlagkörper aus einem thermoplastischen Polyurethan gebildet. Vorteilhaft ist hierbei, dass der Anschlagkörper verbesserte Dämpfungseigenschaften aufweist, wodurch eine Erhöhung der Lebensdauer erreicht wird.

Der Anschlagkörper kann aus einem Material gebildet sein, das einen Druckverformungsrest zwischen 20% und 60%, insbesondere zwischen 30% und 50%, aufweist. Die Prozentteile ergeben sich gemäß einer Druckverformungsprüfung des Materials gemäß DIN ISO 815 bei 23°C und einer Belastungszeit von 24 Stunden. Ein Anschlagkörper mit einem der vorstehend genannten Shore-D-Härtewerte in Kombination mit einem Druckverformungsrest, wie vorstehend genannt, weist ein verbessertes Dämpfungsverhalten auf. Einer Beschädigung des Anschlagkörpers wird dadurch vorgebeugt und eine Lebensdauer der verstellbaren Lenksäule erhöht.

Die Erfindung wird nachstehend mit weiteren Einzelheiten unter Bezug auf die beigefügten Zeichnungen näher erläutert. Die dargestellten Ausführungsformen stellen Beispiele dar, wie die erfindungsgemäße Lenksäule ausgestaltet sein kann.

In diesen zeigen,
- Figur 1: eine perspektivische Ansicht einer verstellbaren Lenksäule nach einem bevorzugten erfindungsgemäßen Ausführungsbeispiel;
- Figur 2: eine perspektivische Detailansicht eines Anschlagkörpers der verstellbaren Lenksäule gemäß Figur 1;
- Figur 3: eine perspektivische Ansicht einer Stelleinheit, einer Spanneinrichtung und einer Feststelleinrichtung der Lenksäule gemäß Figur 1;
- Figur 4: eine perspektivische Vorderansicht eines Anschlagkörpers der verstellbaren Lenksäule gemäß Figur 1;
- Figur 5: eine perspektivische Rückansicht des Anschlagkörpers der verstellbaren Lenksäule gemäß Figur 1;
- Figur 6: eine Vorderansicht des Anschlagkörpers der verstellbaren Lenksäule gemäß Figur 1;
- Figur 7: eine Rückansicht des Anschlagkörpers der einstellbaren Lenksäule gemäß Figur 1, und
- Figur 8: eine Rückansicht eines Anschlagkörpers einer verstellbaren Lenksäule nach einem weiteren erfindungsgemäßen Ausführungsbeispiel.

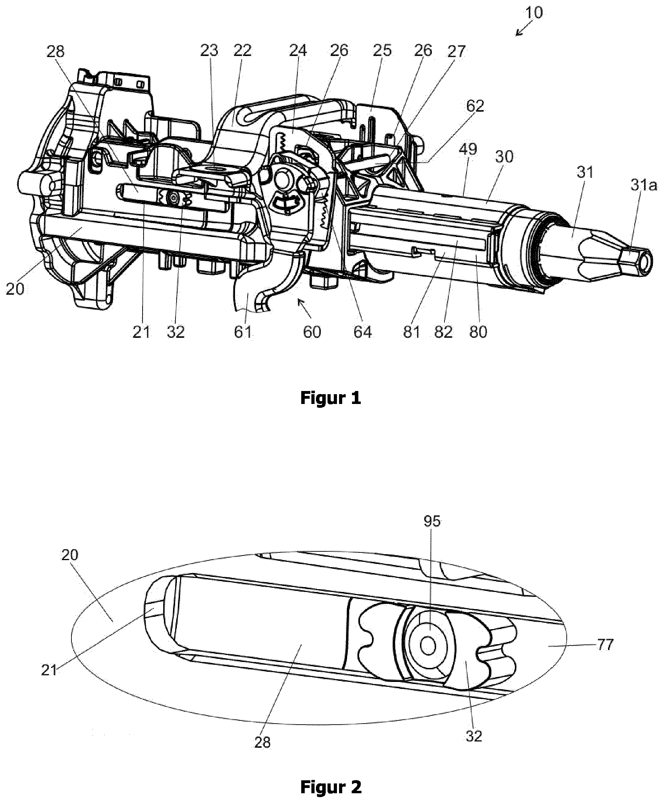

Figur 1 zeigt eine perspektivische Ansicht einer verstellbaren Lenksäule 10 nach einem bevorzugten erfindungsgemäßen Ausführungsbeispiel. Die Lenksäule 10 umfasst eine Halteeinheit 20 und eine Stelleinheit 30. Die Lenksäule 10 ist durch die Halteeinheit 20 an einer Karosserie eines nicht dargestellten Kraftfahrzeugs befestigbar. Die Halteeinheit 20 weist ein Halteelement 22 in Form einer Konsole auf, durch die die Lenksäule 10 mit der Karosserie des Kraftfahrzeugs verbindbar ist. Das Halteelement 22 umfasst zur Verbindung mit der Karosserie Befestigungsmittel 23. Das Halteelement 22 weist des Weiteren Seitenwangen 24, 25 auf, die zueinander beabstandet sind. Die Seitenwangen 24, 25 sind dabei derart zueinander angeordnet, dass die Halteeinheit 20 zwischen den Seitenwangen 24, 25 aufnehmbar ist. Die Stelleinheit 30 ist in der Halteeinheit 20 angeordnet. Ferner weist die Halteeinheit 20 eine Längsöffnung 28 auf. Die Längsöffnung 28 ist durch ein Langloch, insbesondere einen Längsschlitz, gebildet. Auf die Längsöffnung 28 wird später näher eingegangen.

Die Stelleinheit 30 umfasst eine Lenkspindel 31 und ein Mantelrohr 49. Die Lenkspindel 31 und das Mantelrohr 49 weisen eine gemeinsame Längsachse L auf. Die Lenkspindel 31 ist dabei im Mantelrohr 49 um die Längsachse L drehbar gelagert angeordnet. Die Lenkspindel 31 weist ein Spindelende 31a auf, an dem ein nicht dargestelltes Lenkrad auf der Lenkspindel 31 anbringbar ist. Das Mantelrohr 49 ist in einer Aufnahme der Halteeinheit 20 gehaltert.

Die verstellbare Lenksäule 10 weist ferner eine Spanneinrichtung 60 auf, die durch manuelle Betätigung eines Spannhebels 61 in eine Feststellposition oder in eine Freigabeposition bringbar ist. Dabei ist in der Freigabeposition das Mantelrohr 49 zur Längenverstellung in Richtung der Längsachse L innerhalb der Halteeinheit 20 teleskopartig verschiebbar. Ferner ist die Halteeinheit 20 in einer Höhenrichtung relativ zum Halteelement 22 höhenverstellbar, in dem die Halteeinheit 20 um eine Schwenkachse verschwenkbar ist. In der Feststellposition ist das Mantelrohr 49 in Richtung der Längsachse L und die Halteeinheit 20 in der Höhenrichtung fixiert. Die Feststellposition entspricht dem Normalbetrieb der Lenksäule 10. Im Normalbetrieb ist sichergestellt, dass bei den üblicherweise über das Lenkrad auf die Lenkspindel 31 einwirkenden Kräfte die eingestellte Lenkradposition nicht veränderbar ist.

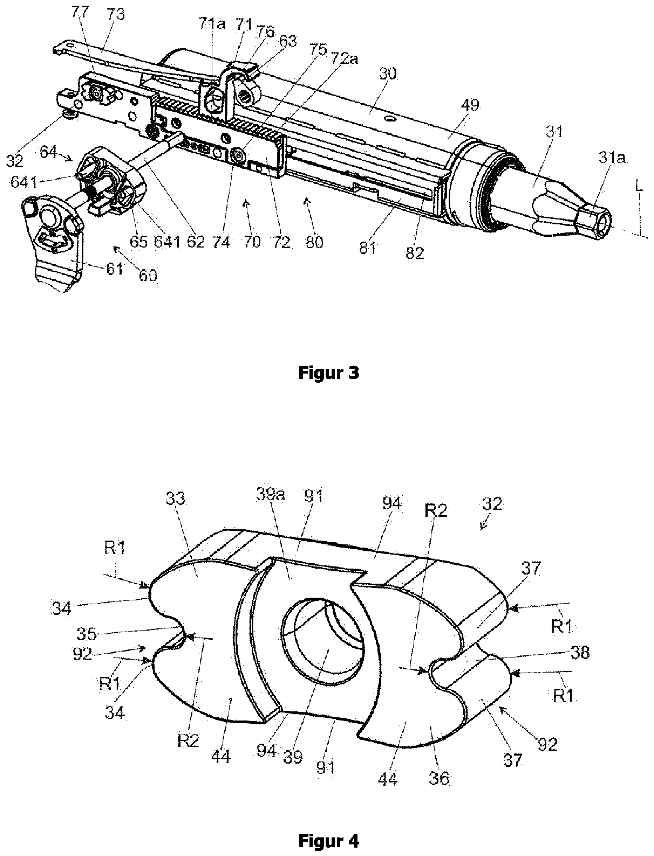

Wie in Figur 3 gezeigt, weist die Spanneinrichtung 60 des Weiteren eine Spannwelle 62 und einen Nocken 63 auf. Der Spannhebel 61 ist mit der Spannwelle 62 drehfest verbunden. Die Spannwelle 62 ist quer zur Längsachse L der Lenkspindel 31 durch Langlöcher 26 in den einander gegenüberliegenden Seitenwangen 24, 25 und durch eine Durchgangsöffnung der Halteeinheit 20 hindurchgeführt. Die Spanneinrichtung 60 umfasst hierbei eine im Allgemeinen bekannte Spannmechanik mit einer Kippstiftanordnung 64 und einer Stützscheibe 65, wobei die Stützscheibe 65 in das eine Langloch 26 eingreift und gegenüber dieser unverdrehbar ist. Die Kippstiftanordnung 64 umfasst zwei Kippstifte 641.

Die Kippstiftanordnung 64 ist mit der Spannwelle 62 drehfest verbunden. Ferner ist die Stützscheibe 65 der Kippstiftanordnung 64 gegenüberliegend drehfest mit der Seitenwange 24 verbunden. Durch eine Drehung des Spannhebels 61 und der damit verbundenen Spannwelle 62 wird die Stützscheibe 65 relativ zu dem Spannhebel 61 und der Spannwelle 62 axial verlagert, da die Kippstifte 641 durch die Drehung des Spannhebels 61 in eine Strecklage überführt werden. Die Stützscheibe 65 wird dadurch von außen gegen die Seitenwange 24 angepresst. Die Spannwelle 62 ist an der gegenüber angeordneten Seitenwange 65 axial verschiebefest gelagert, beispielsweise durch eine als Widerlager wirkende Sechskantmutter, die ein Innengewinde aufweist und auf ein Außengewinde der Spannwelle 62 aufgeschraubt ist. Werden daher die beiden Seitenwangen 24, 25 gegeneinander bewegt, wird die dazwischen angeordnete Halteeinheit 20 kraftschlüssig festgeklemmt. Anstelle der gezeigte Kippstiftanordnung 64 können auch andere Mechanismen zur Umsetzung der Drehbewegung in eine Klemmbewegung zum Einsatz kommen, wie beispielsweise ein Keilscheibe-Nockenscheibe-Klemmvorrichtung.

Generell gilt, dass die Spanneinrichtung zwischen einer Fixierstellung (Feststellposition) und einer Freigabestellung (Freigabeposition) umschaltbar ist, wobei in der Fixierstellung die Stelleinheit gegenüber der Halteinheit festgesetzt ist und in der Freigabestellung die Stelleinheit gegenüber der Halteeinheit verstellbar ist.

Die Spannwelle 62 ist durch quer zur Längsachse L der Lenkspindel 31 einander gegenüber angeordnete Öffnungen 27 in der Halteeinheit 20 hindurchgeführt. Die Halteeinheit 20 ist ähnlich einer Spannhülse oder einer Schelle zwischen den Öffnungen 27 in Längsrichtung geschlitzt ausgebildet. Dadurch wird bei der beschriebenen Verspannung der Seitenwangen 24, 25 durch die Klemmkraft die Halteeinheit 20 quer zur Längsachse L zusammengepresst. Hierbei ist die Feststellposition eingestellt, wobei das Mantelrohr 49 kraftschlüssig in der Halteeinheit 20 festgeklemmt ist. Die Halteeinheit 20 weist einen Schlitz in Richtung der Längsachse L auf, der im Bereich der Spannwelle 62 ausgebildet ist. Der Schlitz weist in der Feststellposition eine verringerte Breite aufgrund der wirkenden Klemmkraft im Vergleich zur Freigabeposition auf. Durch diese verringerte Breite wird das Mantelrohr 49 in der Halteeinheit 20 festgeklemmt ist. Die Verschmälerung des Schlitzes der Halteeinheit 20 geht mit einer Reduzierung des Innendurchmessers der Bohrung der Halteeinheit 20 einher, in dem die Stelleinheit 30 aufgenommen ist.

Wie in Figur 3 gezeigt, umfasst die verstellbare Lenksäule 10 eine Feststelleinrichtung 70. Die Feststelleinrichtung 70 weist ein Arretierelement 71 und ein Eingriffselement 72 auf. Das Arretierelement 71 ist in Richtung der Längsachse L in der Halteeinheit 20 verschiebefest gelagert. In der Höhenrichtung ist das Arretierelement 71 zur Einstellung der Feststellposition oder der Freigabeposition des Spannhebels 61 höhenverstellbar gelagert. Mit anderen Worten ist das Arretierelement 71 in der Halteeinheit 20 derart angeordnet, dass das Arretierelement 71 in der Halteeinheit 20 in der Höhenrichtung verschiebbar ist. Das Eingriffselement 72 kann über eine Energieabsorptionseinrichtung 80 mit dem Mantelrohr 49 verbunden sein. Das Arretierelement 71 und das Eingriffselement 72 weisen Formschlussmittel 71a, 72a auf. Die Formschlussmittel 71a, 72a sind durch eine Hubbewegung des Arretierelements 71 formschlüssig in Eingriff bringbar.

Das Arretierelement 71 weist im Wesentlichen einen quaderförmigen Grundkörper auf. Der Grundkörper des Arretierelements 71 weist in einem Eingriffsbereich erste Formschlussmittel 71a auf. Die ersten Formschlussmittel 71a sind hierbei durch eine Verzahnung gebildet. Die Verzahnung kann durch eine Sägezahn-Verzahnung gebildet sein. Das Arretierelement 71 weist ferner einen vom Grundkörper des Arretierelements 71 abstehend ausgebildeten Arretierhebel 76 auf. Der Arretierhebel 76 ist am Arretierelement 71 derart ausgebildet, dass sich der Arretierhebel 76 vom Grundkörper des Arretierelements 71 in Richtung der Längsachse L des Mantelrohres 49 erstreckt. Der Arretierhebel 76 ist hakenförmig ausgebildet. Der Arretierhebel 76 kann federnde Eigenschaften aufweisen. Der Arretierhebel 76 kann elastisch verformbar, insbesondere spannbar. Bevorzugt ist der Arretierhebel 76 steif ausgebildet. Der Arretierhebel 76 weist ein freies Ende auf, an dem eine Kulissenbahn ausgebildet ist.

Das Eingriffselement 72 weist eine längliche Bauform auf und ist in dieser Ausführungsvariante als Verbundbauteil ausgebildet, welches aus metallischen und nichtmetallischen Elementen besteht. Die metallischen Elemente sind dabei als Sinterbauteil ausgebildet. Des Weiteren umfasst das Eingriffselement 72 eine rechteckige Querschnittsform. Das Eingriffselement 72 ist quaderförmig ausgebildet. Das Eingriffselement 72 weist auf einer dem Arretierelement 71 zugewandten Seite zweite Formschlussmittel 72a auf. Die zweiten Formschlussmittel 72a sind dabei durch eine Verzahnung gebildet. Die Verzahnung der zweiten Formschlussmittel 72a ist dabei zu den ersten Formschlussmitteln 71a des Arretierelements 71 komplementär ausgebildet. Das Arretierelement 71 ist daher durch die ersten Formschlussmittel 71a mit den zweiten Formschlussmitteln 72a des Eingriffselements 72 in Eingriff bringbar. Das Arretierelement 71 ist somit dem Eingriffselement 72 formschlüssig verbindbar.

Die Feststelleinrichtung 70 umfasst ferner ein Führungselement 77, an dem das Eingriffselement 72 angeordnet ist. Das Führungselement 77 weist einen Aufnahmebereich auf, in dem das Eingriffselement 72 eingesetzt ist.

Das Eingriffselement 72 weist ferner eine Befestigungsöffnung 74 und das Führungselement 77 eine Durchgangsöffnung auf, durch die ein Sollbruchelement in Form eines Scherbolzens 75 hindurchgeführt ist. Der Scherbolzen 75 ist fest mit dem Mantelrohr 49 verbunden. Ferner wird das Eingriffselement 73 und das Führungselement 77 durch den Scherbolzen 75 an der Energieabsorptionseinrichtung 80 gehalten.

Die Energieabsorptionseinrichtung 80 ist an dem Mantelrohr 49 angeordnet. Die Energieabsorptionseinrichtung 80 weist ein Gehäuse in Form eines Halteprofils 81 auf. Das Halteprofil 81 ist C-förmig ausgebildet. Das Halteprofil 81 kann durch eine C-förmige Schiene gebildet sein. Das Halteprofil 81 ist fest mit dem Mantelrohr 49 verbunden. Des Weiteren erstreckt sich das Halteprofil 81 in Längsrichtung des Mantelrohrs 49, wobei der offene Querschnitt des Halteprofils 81 gegen eine Außenseite des Mantelrohrs 49 gerichtet ist. Die Schenkel des C-förmigen Halteprofils 81 können mit dem Mantelrohr 49 durch Schweißen, insbesondere Laserschweißen verbunden sein. Das Halteprofil 81 weist auf einer nach außen gerichteten Außenseite einen Schlitz 82 auf. Der Schlitz 82 erstreckt sich dabei parallel zur Längsachse L des Mantelrohres 49. Die Energieabsorptionseinrichtung 80 umfasst zumindest ein Energieabsorptionselement, das im Crashfall plastisch deformiert wird.

Wie in Figur 3 gut erkennbar, ist des Weiteren ein Federelement 73 zur Vorspannung des Arretierelements 71 vorgesehen. Das Federelement 73 ist mit der Halteeinheit 20 verbunden. Das Federelement 73 kann durch eine Federzunge gebildet sein. Ferner kann das Federelement 73 auch durch einen Federstab gebildet sein. Ebenso ist denkbar, dass das Federelement 73 durch eine Blattfeder gebildet ist. Des Weiteren ist möglich, dass das Federelement 73 durch eine Spiralfeder oder eine Tellerfeder gebildet ist.

Das Federelement 73 gemäß Figur 3 weist eine längliche Bauform auf und ist aus Federstahl gebildet. Das Federelement 73 steht mit einem freien Ende mit dem Arretierelement 61 in Kontakt. Das Arretierelement 71 wird durch das Federelement 73 gegen das Eingriffselement 72 gepresst. Durch das Federelement 73 sind die Formschlussmittel 71a, 72a des Arretierelements 71 und des Eingriffselements 72 formschlüssig in Eingriff lösbar verbindbar. Das Federelement 73 greift zur Vorspannung des Arretierelements 71 gegen das Eingriffselement 73 an einer Materialstufe des Arretierelements 71 an.

In der Feststellposition der Spanneinrichtung 60 ist das Arretierelement 71 mit dem Eingriffselement 72 in Richtung der Längsachse L verschiebefest, insbesondere formschlüssig verbunden. Beim Überführen der Spanneinrichtung 60 von der Feststellposition in die Freigabeposition wird der Nocken 63 der Spanneinrichtung 60 durch den Spannhebel 61 bzw. die Spannwelle 62 gedreht. Der Nocken 63 wirkt dabei mit einer Nockenspitze mit der Kulissenbahn des Arretierelements 71 zusammen. Mit anderen Worten wird durch eine manuelle Betätigung des Spannhebels 61 der Nocken 63 derart gedreht, sodass das Arretierelement 71 angehoben wird. Dies entspricht der Freigabestellung der Spanneinrichtung 60, bei der die Stelleinheit 30 in der Halteeinheit 20 in Längsrichtung L der Lenkspindel 31 verstellbar ist. In der Freigabeposition der Spanneinrichtung 60 ist das Arretierelement 71 vom Eingriffselement 72 entkoppelt.

Wie in Figur 1 bis Figur 3 gezeigt, umfasst die verstellbare Lenksäule 10 einen Anschlagkörper 32 zur Begrenzung einer Verschiebebewegung der Stelleinheit 30. Ferner dient der Anschlagkörper 32 zur Verbesserung des Anschlagverhaltens, insbesondere des Dämpfungsverhaltens, in einer Anschlagsituation bei einer Längenverstellung der Stelleinheit 30. Auf die Ausgestaltung des Anschlagkörpers 32 wird nachfolgend anhand der Figuren 4 bis 7 näher eingegangen. Auf den Anschlagkörper 32 im montierten Zustand wird später näher anhand den Figuren 1 bis 3 näher eingegangen.

Gemäß Figur 4 bis Figur 7 ist der Anschlagkörper 32 länglich ausgebildet. Der Anschlagkörper 32 umfasst zwei Längsseiten 91, zwei Breitseiten 92 und eine Körperdicke 93. Der Anschlagkörper 32 weist an den Längsseiten 91 jeweils eine Körpereinwölbung 94 auf. Die Körpereinwölbung 94 ist dabei in Richtung einer Körpermitte des Anschlagkörpers 32 ausgebildet. Ferner weist der Anschlagkörper 32 ein erstes Anschlagkörperende und ein zweites Anschlagkörperende auf, die in Längsrichtung des Anschlagkörpers 32 einander gegenüber angeordnet sind.

Der Anschlagkörper 32 umfasst einen ersten Anschlagabschnitt 33, der zwei erste Teilabschnitte 34 und einen dazwischenliegenden, ersten Zwischenabschnitt 35 umfasst. Der erste Anschlagabschnitt 33 bildet das erste Anschlagköperende. Die ersten Teilabschnitte 34 sind konvex ausgebildet und der erste Zwischenabschnitt 35 ist konkav ausgebildet.

Ferner weist der Anschlagkörper 32 einen zweiten Anschlagabschnitt 36 auf, der das zweite Anschlagkörperende bildet. Die Anschlagabschnitte 33, 36 sind somit in Längsrichtung des Anschlagkörpers 32 einander gegenüberliegend angeordnet. Mit anderen Worten bildet jeweils ein Anschlagabschnitte 33, 36 eine Stirnseite des Anschlagkörpers 32. Der zweite Anschlagabschnitt 36 umfasst zwei zweite Teilabschnitte 37 und einen dazwischenliegenden, zweiten Zwischenabschnitt 38. Die zweiten Teilabschnitte 37 sind konvex ausgebildet und der zweite Zwischenabschnitt 38 ist konkav ausgebildet.

Die konvexen Teilabschnitte 34, 37 sind an den Anschlagabschnitten 33, 36 in Längsrichtung des Anschlagkörpers 32 nach außen gewölbt ausgebildet. Die konvexen Teilabschnitte 34 ,37 bilden an den Anschlagabschnitten 33, 36 jeweils zwei Materialauswölbungen. Die konkaven Zwischenabschnitte 35, 38 sind an den Anschlagabschnitten 33, 36 in Längsrichtung des Anschlagkörpers 32 nach innen gewölbt ausgebildet. Die jeweiligen konkaven Zwischenabschnitte 35, 38 bilden an den jeweiligen Anschlagabschnitten 33, 36 eine Materialeinbuchtung. Die Anschlagabschnitte 33, 36 sind gabelförmig ausgebildet.

Die Anschlagabschnitte 33, 36 können um eine zentrale Querachse Q, die quer zur Längsseite 91 des Anschlagkörpers 32 vorgesehen ist, am Anschlagkörper 32 spiegelsymmetrisch ausgebildet sein. Ferner können die Anschlagabschnitte 33, 36 um eine Längszentralachse Z, die in Längsrichtung des Anschlagkörpers 32 vorgesehen ist, am Anschlagkörpers 32 spiegelsymmetrisch ausgebildet sein. Ferner können die Anschlagabschnitte 33, 36 um eine Vertikalzentralachse V, die orthogonal zur Längszentralachse Z und orthogonal zur zentralen Querachse Q vorgesehen ist, am Anschlagkörpers 32 spiegelsymmetrisch ausgebildet sein.

Wie in Figur 4 bis Figur 7 ersichtlich, weisen die Teilabschnitte 34, 37 jeweils einen Radius R1 und der jeweilige Zwischenabschnitt 35, 38 einen weiteren Radius R2 auf. Der Radius R1 der Teilabschnitte 34, 37 ist größer als der weitere Radius R2 der Zwischenabschnitte 35, 38 ausgebildet. Es ist auch denkbar, dass der Radius R1 der Teilabschnitte 34, 37 und der weitere Radius R2 der Zwischenabschnitte 35, 38 gleich groß ist. Ferner ist denkbar, dass der Radius R1 der Teilabschnitte 34, 37 kleiner als der weitere Radius R2 der Zwischenabschnitte 35, 38 ausgebildet ist. Die Teilabschnitte 34, 37 können jeweils unterschiedlich große Radien aufweisen, die größer als der weitere Radius R2 des jeweiligen Zwischenabschnitts 35, 38 sind.

Der Anschlagkörper 32 weist ferner eine Durchgangsöffnung 39 mit einer Achse zur Befestigung an der Stelleinheit 30 auf. Die Achse der Durchgangsöffnung 39 entspricht dabei der zentralen Querachse Q, wie vorstehend beschrieben. Die Durchgangsöffnung 39 ist durch eine Durchgangsbohrung gebildet. Die Teilabschnitte 34, 37 umfassen jeweils einen Scheitelpunkt 41, der einen ersten Abstand L1 oder einen zweiten Abstand L2 zur Achse der Durchgangsöffnung 39 aufweist.

Gemäß Figur 4 bis Figur 7 weist der erste Abstand L1 und der zweite Abstand L2 der jeweiligen Scheitelpunkte 41 der Teilabschnitte 34, 37 einen gleichen Wert auf. Mit andere Worten weisen die Scheitelpunkte 41 der Teilabschnitte 34, 37 zur zentralen Querachse Q des Anschlagkörpers 32 einen gleich großen Abstand L1, L2 auf. Die Scheitelpunkte 41 des ersten Anschlagabschnitts 33 weisen dabei den ersten Abstand L1 zur Achse der Durchgangsöffnung 39 auf. Ferner weisen die Scheitelpunkte 41 des zweiten Anschlagabschnitts 36 denn zweiten Abstand L2 zur Achse der Durchgangsöffnung 39 auf.

Des Weiteren umfasst der Anschlagkörper 32 eine Materialausnehmung 39a, die um die Durchgangsöffnung 39 im Anschlagkörper 32 ausgebildet ist. Die Materialausnehmung 39a ist ausgehend von einer ersten Seitenfläche 44 des Anschlagkörpers 32 nach innen ausgebildet. Mit anderen Worten ist die Materialausnehmung 39a ausgehend von der ersten Seitenfläche 44 des Anschlagkörpers 32 in Richtung der Körpermitte des Anschlagkörpers 32 ausgebildet. Die Materialausnehmung 39a ist kreissegmentförmig, insbesondere rund, ausgebildet. Die Materialausnehmung 39a kann auch eckig ausgebildet sein.

Die Materialausnehmung 39a bildet eine Versenkung an der Durchgangsöffnung 39, um ein nicht dargestelltes Befestigungselement, beispielsweise einen Scherbolzen, bei der Befestigung des Anschlagkörpers 32 einzubetten. Das Befestigungselement kann dabei derart eingebettet werden, dass dieses im montierten Zustand über die erste Seitenfläche 44 des Anschlagkörpers 32 nicht hervorsteht. Ein Bolzenkopf des Scherbolzens ist somit in der Materialausnehmung 39a aufgenommen.

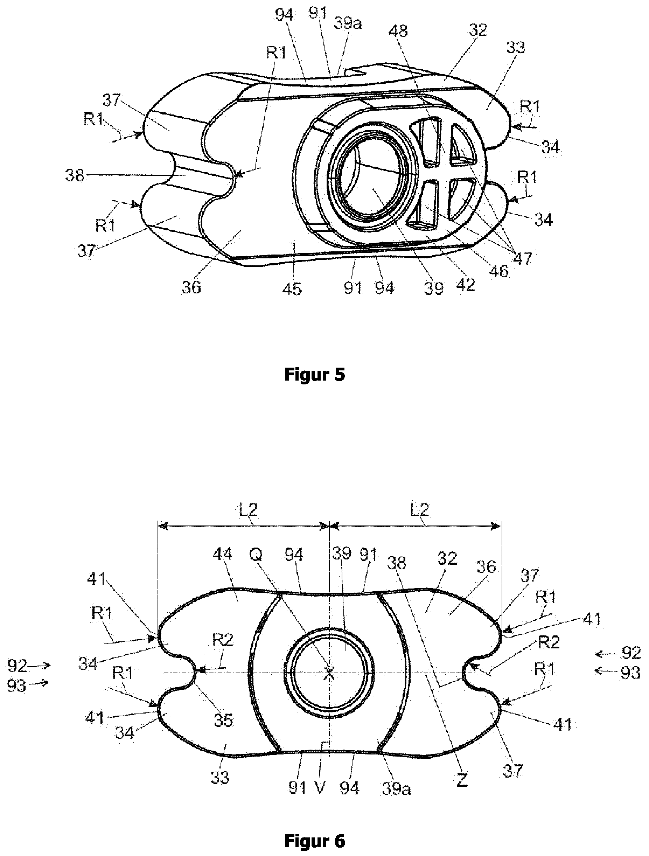

Wie in Figur 5 ersichtlich, umfasst der Anschlagkörper 32 einen Verstärkungsabschnitt 42, der die Körperdicke 93 des Anschlagkörpers 32 bereichsweise vergrößert. Der Verstärkungsabschnitt 42 ist an einer zweiten Seitenfläche 45 des Anschlagkörpers 32 ausgebildet. Die zweite Seitenfläche 45 ist am Anschlagkörper 32 der ersten Seitenfläche 44 des Anschlagkörpers 32 gegenüberliegend angeordnet. Der Verstärkungsabschnitt 42 ist von der zweiten Seitenfläche 45 des Anschlagkörpers 32 abstehend ausgebildet. Der Verstärkungsabschnitt 42 ist durch eine Materialstufe, insbesondere eine Erhöhung, gebildet. Der Verstärkungsabschnitt 42 ist ausgehend von der zweiten Seitenfläche 45 des Anschlagkörpers 32 nach außen verjüngt ausgebildet. Der Verstärkungsabschnitt 42 kann auch mit orthogonal von der zweiten Seitenfläche 45 des Anschlagkörpers 32 abstehenden Seitenwänden, insbesondere unverjüngt, ausgebildet sein. Der Verstärkungsabschnitt 42 kann abgerundet ausgebildet sein. Der Verstärkungsabschnitt 42 ist am Anschlagkörper 32 die Durchgangsöffnung 39 umschließend ausgebildet.

Der Verstärkungsabschnitt 42 weist eine Anlagefläche 46 auf. Ferner umfasst der Verstärkungsabschnitt 42 mehrere Materialausnehmungen 47. Konkret weist der Verstärkungsabschnitt 42 vier Materialausnehmungen 47 auf. Dabei sind Stege 48, insbesondere vier Stege 48, zwischen den Materialausnehmungen 47 ausgebildet, die an einer Stelle zusammentreffen. Die Materialausnehmungen 47 und die Stege 48 bilden zusammen eine Wabenstruktur.

Durch die Materialausnehmungen 47 ist der Verstärkungsabschnitt 42 und somit der Anschlagkörper 32 in einer Anschlagsituation verbessert elastisch verformbar. Der Verstärkungsabschnitt 42 kann auch mehr als vier Materialausnehmungen 47 und/oder mehr als vier Stege 48 aufweisen. Es ist auch möglich, dass der Verstärkungsabschnitt 42 weniger als vier Materialausnehmungen 47 und/oder weniger als vier Stege 48 aufweist. Die Materialausnehmungen können auch wabenförmig ausgebildet sein, besonders bevorzugt bienenwabenförmig. Alternativ können die Materialausnehmungen aus waffelförmig ausgebildet sein.

Generell ist denkbar, dass der Anschlagkörper 32 mehr als einen Verstärkungsabschnitt 42 aufweisen kann. Beispielsweise kann der Verstärkungsabschnitt 42 an der ersten Seitenfläche 44 und/oder der zweiten Seitenfläche 45 des Anschlagkörpers 32 ausgebildet sein.

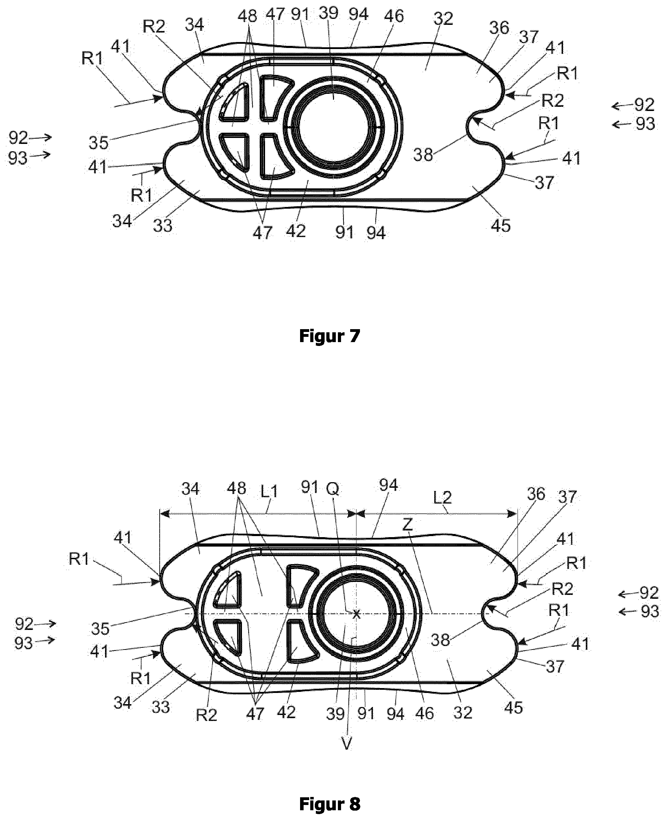

Gemäß Figur 8 ist ein Anschlagkörper 32 gezeigt, der im Unterschied zum Anschlagkörper 32 gemäß Figur 4 bis Figur 7 einen längeren Grundkörper aufweist. Konkret weisen gemäß Figur 4 bis Figur 7 die Scheitelpunkte 41 der ersten Teilabschnitte 34 den ersten Abstand L1 zur Achse der Durchgangsöffnung 39 und die Scheitelpunkte 41 der zweiten Teilabschnitte 37 den zweiten Abstand L2 zur Achse der Durchgangsöffnung 39 auf. Dabei ist der erste Abstand L1 größer als der zweite Abstand L2. Die Abstände L1, L2 weisen somit einen ungleichen Wert auf. Die Scheitelpunkte 41 des ersten Anschlagabschnitts 33 sind hierbei weiter von der Querachse Q des Anschlagkörpers 32 beabstandet als die Scheitelpunkte 41 des zweiten Anschlagkörpers 36.

Im weiteren Unterschied ist der Verstärkungsabschnitt 42 des Anschlagkörpers 32 gemäß Figur 8 größer, insbesondere länger, ausgebildet als der Verstärkungsabschnitt 42 des Anschlagkörpers 32 gemäß Figur 4 bis Figur 7.

Der Anschlagkörper 32 gemäß den Figuren 1 bis 8 kann aus Kunststoff und/oder Elastomer gebildet sein. Konkret kann der Anschlagkörper 32 aus einem thermoplastischen Polyurethan gebildet sein. Der Anschlagkörper 32 kann des Weiteren aus einem Material gebildet sein, das einen Shore-D-Härtewert zwischen 40 und 80 aufweist. Der Anschlagkörper 32 kann auch aus einem Material gebildet sein, das einen Shore-D-Härtewert zwischen 50 und 60, insbesondere zwischen 55 und 65, aufweist. Es ist auch denkbar, dass der Anschlagkörper 32 aus einem Material gebildet ist, das einen Shore-D-Härtewert von 64 aufweist. Die Härtewerte ergeben sich gemäß einer Prüfung des Materials gemäß DIN ISO 7619-1 bei einer Haltezeit von 15s.

Der Anschlagkörper 32 kann ferner aus einem Material gebildet sein, das einen Druckverformungsrest zwischen 20% und 60%, insbesondere zwischen 30% und 50%, aufweist. Die Prozentteile ergeben sich gemäß einer Druckverformungsprüfung des Materials gemäß DIN ISO 815 bei 23°C und einer Belastungszeit von 24h.

Figur 1 bis Figur 3 zeigen den Anschlagkörper 32 gemäß Figur 4 bis Figur 7 im montierten Zustand. Der Anschlagkörper 32 ist durch ein Befestigungselement 95, insbesondere einer Schraube, einem Befestigungsstift oder einem Scherbolzen, mit dem Führungselement 77 positionsfest verbunden. Mit anderen Worten ist der Anschlagkörper 32 über die Energieabsorptionseinrichtung 80 mit dem Mantelrohr 49 der Stelleinheit 30 verbunden. Wie in Figur 1 beschrieben, weist die Halteeinheit 20 eine Längsöffnung 28, insbesondere einen Längsschlitz auf. Wie in Figur 1 und Figur 2 gezeigt, ist der Anschlagkörper 32 in der Längsöffnung 28 angeordnet. Der Anschlagkörper 32 ist in der Längsöffnung 28 der Halteeinheit 20 derart angeordnet, dass die Stelleinheit 30 in Längsrichtung der Lenkspindel 31 verschiebbar ist. Die Längsöffnung 28 der Halteeinheit 20 bildet einen Gegenanschlag 21 zum Anschlagkörper 32, der eine Verschiebebewegung der Stelleinheit 30 begrenzt. Durch die Längsöffnung 28 der Halteeinheit 20 ist ein maximaler Verschiebeweg in beide Verschieberichtungen zur Längenverstellung der Lenksäule 10 definiert bzw. bestimmt. Zur Begrenzung der Verschiebebewegung der Stelleinheit 30 wirkt der Anschlagkörper 32 mit dem Gegenanschlag 21 zusammen.

Generell kann die verstellbare Lenksäule 10 wenigstens zwei Anschlagkörper 32 aufweisen. Dabei kann ein erster Anschlagkörper 32 eine Längenverstellung bzw. einen Verschiebeweg in Längsrichtung der Stelleinheit 20 begrenzen. Ein zweiter Anschlagkörper 32 kann eine Höhenverstellung, insbesondere einen Verschiebeweg in Höhenrichtung der Halteeinheit 20 und/oder der Stelleinheit 30 begrenzen. Des Weiteren kann der erste Anschlagkörper 32 eine Verschiebebewegung der Stelleinheit 20 in Längsrichtung dämpfen. Es ist denkbar, dass die verstellbare Lenksäule 10 mehr als zwei Anschlagkörper 32 umfasst.

### Bezugszeichenliste

- 10: verstellbare Lenksäule
- 20: Halteeinheit
- 21: Gegenanschlag
- 22: Halteelement
- 23: Befestigungsmittel
- 24: Seitenwange
- 25: Seitenwange
- 26: Langlöcher
- 27: Öffnungen
- 28: Längsöffnung
- 30: Stelleinheit
- 31: Lenkspindel
- 31a: Spindelende
- 32: Anschlagkörper
- 33: erster Anschlagabschnitt
- 34: erster Teilabschnitt
- 35: erster Zwischenabschnitt
- 36: zweiter Anschlagabschnitt
- 37: zweiter Teilabschnitt
- 38: zweiter Zwischenabschnitt
- 39: Durchgangsöffnung
- 39a: Materialausnehmung
- 41: Scheitelpunkt
- 42: Verstärkungsabschnitt
- 44: erste Seitenfläche
- 45: zweite Seitenfläche
- 46: Anlagefläche
- 47: Materialausnehmung des Verstärkungsabschnitts
- 48: Stege
- 49: Mantelrohr
- 60: Spanneinrichtung
- 61: Spannhebel
- 62: Spannwelle
- 63: Nocken
- 64: Kippstiftanordnung
- 641: Kippstift
- 65: Stützscheibe
- 70: Feststelleinrichtung
- 71: Arretierelement
- 71a: Formschlussmittel
- 72: Eingriffselement
- 72a: Formschlussmittel
- 73: Federelement
- 74: Befestigungsöffnung
- 75: Scherbolzen
- 76: Arretierhebel
- 77: Führungselement
- 80: Energieabsorptionseinrichtung
- 81: Halteprofil
- 82: Schlitz
- 91: Längsseite
- 92: Breitseite
- 93: Körperdicke
- 94: Körpereinwölbung
- 95: Befestigungselement
- R1: Radius
- R2: weiterer Radius
- L: Längsachse
- L1: erster Abstand
- L2: zweiter Abstand
- Q: zentrale Querachse
- V: Vertikalzentralachse
- Z: Längszentralachse

## Patentansprüche

1. Verstellbare Lenksäule (10) für ein Kraftfahrzeug, die eine Halteeinheit (20) und eine Stelleinheit (30) mit einer drehbar gelagerten Lenkspindel (31) umfasst, wobei die Stelleinheit (30) gegenüber der Halteeinheit (20) verschiebbar angeordnet ist und wenigstens einen Anschlagkörper (32) aufweist, der mit der Stelleinheit (30) fest verbunden ist, und wobei die Halteeinheit (20) einen Gegenanschlag (21) umfasst, der mit dem Anschlagkörper (32) zur Begrenzung einer Verschiebebewegung der Stelleinheit (30) zusammenwirkt, wobei
der Anschlagkörper (32) einen ersten Anschlagabschnitt (33) aufweist, der wenigstens zwei erste Teilabschnitte (34) und wenigstens einen dazwischenliegenden, ersten Zwischenabschnitt (35) umfasst, wobei die ersten Teilabschnitte (34) konvex ausgebildet sind und der erste Zwischenabschnitt (35) konkav ausgebildet ist,
**dadurch gekennzeichnet,**
**dass** der Anschlagkörper (32) aus einem Material gebildet ist, das einen Shore-D-Härtewert zwischen 40 und 80 aufweist.

2. Lenksäule nach Anspruch 1,
**dadurch gekennzeichnet, dass**
der Anschlagkörper (32) wenigstens einen zweiten Anschlagabschnitt (36) aufweist, der wenigstens zwei zweite Teilabschnitte (37) und wenigstens einen dazwischenliegenden, zweiten Zwischenabschnitt (38) umfasst, wobei die zweiten Teilabschnitte (37) konvex ausgebildet sind und der zweite Zwischenabschnitt (38) konkav ausgebildet ist.

3. Lenksäule nach Anspruch 1 oder 2,
**dadurch gekennzeichnet, dass**
die Teilabschnitte (34, 37) jeweils einen Radius (R1) aufweisen und der Zwischenabschnitt (35, 38) einen weiteren Radius (R2) aufweist, wobei der Radius (R1) größer ist als der weitere Radius (R2).

4. Lenksäule nach Anspruch 1 oder 2,
**dadurch gekennzeichnet, dass**
der Anschlagkörper (32) wenigstens eine Durchgangsöffnung (39) mit einer Längsachse zur Befestigung an der Stelleinheit (30) aufweist.

5. Lenksäule nach Anspruch 4,
**dadurch gekennzeichnet, dass**
die Teilabschnitte (34, 37) jeweils einen Scheitelpunkt (41) umfassen, der einen ersten Abstand (L1) oder einen zweiten Abstand (L2) zur Längsachse der Durchgangsöffnung (39) aufweist, wobei der erste Abstand (L1) und der zweite Abstand (L2) einen gleichen oder ungleichen Wert aufweisen.

6. Lenksäule nach einem der vorhergehenden Ansprüche,
**dadurch gekennzeichnet, dass**
der Anschlagkörper (32) in wenigstens einem der beiden Anschlagabschnitte (33, 36) einen Verstärkungsabschnitt (42) aufweist, der eine Dicke des Anschlagkörpers (32) bereichsweise vergrößert.

7. Lenksäule nach einem der vorhergehenden Ansprüche,
**dadurch gekennzeichnet, dass**
der Anschlagkörper (32) aus Kunststoff und/oder Elastomer gebildet ist.

8. Lenksäule nach einem der vorhergehenden Ansprüche,
**dadurch gekennzeichnet, dass**
der Anschlagkörper (32) aus einem thermoplastischen Polyurethan gebildet ist.

9. Lenksäule nach einem der vorhergehenden Ansprüche,
**dadurch gekennzeichnet, dass**
der Anschlagkörper (32) aus einem Material gebildet ist, das einen Druckverformungsrest zwischen 20% und 60% aufweist.

## Claims

1. Adjustable steering column (10) for a motor vehicle, which comprises a holding unit (20) and an adjusting unit (30) with a rotatably mounted steering spindle (31), wherein the adjusting unit (30) is arranged displaceably relative to the holding unit (20) and has at least one stop body (32) which is fixedly connected to the adjusting unit (30), and wherein the holding unit (20) comprises a counter-stop (21) which cooperates with the stop body (32) for limiting a displacement movement of the adjusting unit (30), wherein the counter-stop (21) is connected to the holding unit (20) in such a way that it can be displaced by the adjusting unit (30).
the stop body (32) has a first stop section (33) which comprises at least two first partial sections (34) and at least one intermediate first section (35), wherein the first partial sections (34) are convex and the first intermediate section (35) is concave,
**characterised in**
**in that** the stop body (32) is formed from a material which has a Shore D hardness value of between 40 and 80.

2. Steering column according to claim 1,
**characterised in that**
the stop body (32) has at least one second stop section (36) which comprises at least two second subsections (37) and at least one second intermediate section (38) located therebetween, wherein the second subsections (37) are convex and the second intermediate section (38) is concave.

3. Steering column according to claim 1 or 2,
**characterised in that**
the partial sections (34, 37) each have a radius (R1) and the intermediate section (35, 38) has a further radius (R2), wherein the radius (R1) is greater than the further radius (R2).

4. Steering column according to claim 1 or 2,
**characterised in that**
the stop body (32) has at least one through-opening (39) with a longitudinal axis for attachment to the adjusting unit (30).

5. Steering column according to claim 4,
**characterised in that**
the partial sections (34, 37) each comprise an apex (41) which has a first distance (L1) or a second distance (L2) from the longitudinal axis of the passage opening (39), wherein the first distance (L1) and the second distance (L2) have an equal or unequal value.

6. Steering column according to one of the preceding claims,
**characterised in that**
the stop body (32) has a reinforcing section (42) in at least one of the two stop sections (33, 36), which increases a thickness of the stop body (32) in certain regions.

7. Steering column according to one of the preceding claims,
**characterised in that**
the stop body (32) is made of plastic and/or elastomer.

8. Steering column according to one of the preceding claims,
**characterised in that**
the stop body (32) is formed from a thermoplastic polyurethane.

9. Steering column according to one of the preceding claims,
**characterised in that**
the stop body (32) is formed from a material which has a compression set of between 20% and 60%.

## Revendications

1. Colonne de direction réglable (10) pour un véhicule automobile, qui comprend une unité de support (20) et une unité de réglage (30) avec un arbre de direction (31) logé de manière rotative, l'unité de réglage (30) étant disposée de manière coulissante par rapport à l'unité de support (20) et présentant au moins un corps de butée (32) qui est relié de manière fixe à l'unité de réglage (30), et l'unité de support (20) comprenant une contre-butée (21) qui coopère avec le corps de butée (32) pour limiter un mouvement de coulissement de l'unité de réglage (30), où
le corps de butée (32) présente une première section de butée (33) qui comprend au moins deux premières sections partielles (34) et au moins une première section intermédiaire (35) située entre celles-ci, les premières sections partielles (34) étant de forme convexe et la première section intermédiaire (35) étant de forme concave,
**caractérisé en ce que**
**en ce que** le corps de butée (32) est formé d'un matériau qui présente une valeur de dureté Shore D comprise entre 40 et 80.

2. Colonne de direction selon la revendication 1,
**caractérisé en ce que**
le corps de butée (32) présente au moins une deuxième section de butée (36) qui comprend au moins deux deuxièmes sections partielles (37) et au moins une deuxième section intermédiaire (38) située entre celles-ci, les deuxièmes sections partielles (37) étant de forme convexe et la deuxième section intermédiaire (38) étant de forme concave.

3. Colonne de direction selon la revendication 1 ou 2,
**caractérisé en ce que**
les sections partielles (34, 37) présentent chacune un rayon (R1) et la section intermédiaire (35, 38) présente un autre rayon (R2), le rayon (R1) étant supérieur à l'autre rayon (R2).

4. Colonne de direction selon la revendication 1 ou 2,
**caractérisé en ce que**
le corps de butée (32) présente au moins une ouverture de passage (39) avec un axe longitudinal pour la fixation sur l'unité de réglage (30).

5. Colonne de direction selon la revendication 4,
**caractérisé en ce que**
les sections partielles (34, 37) comprennent chacune un sommet (41) qui présente une première distance (L1) ou une deuxième distance (L2) par rapport à l'axe longitudinal de l'ouverture de passage (39), la première distance (L1) et la deuxième distance (L2) présentant une valeur égale ou différente.

6. Colonne de direction selon l'une quelconque des revendications précédentes,
**caractérisé en ce que**
le corps de butée (32) présente dans au moins l'une des deux sections de butée (33, 36) une section de renforcement (42) qui augmente par zones une épaisseur du corps de butée (32).

7. Colonne de direction selon l'une quelconque des revendications précédentes,
**caractérisé en ce que**
le corps de butée (32) est formé en matière plastique et/ou en élastomère.

8. Colonne de direction selon l'une quelconque des revendications précédentes,
**caractérisé en ce que**
le corps de butée (32) est formé d'un polyuréthane thermoplastique.

9. Colonne de direction selon l'une quelconque des revendications précédentes,
**caractérisé en ce que**
le corps de butée (32) est formé d'un matériau qui présente une déformation rémanente à la compression comprise entre 20 % et 60 %.
